# EUROPEAN PATENT APPLICATION

(11) **EP 1 215 339 A2**
(43) Date of publication of application: **19.06.2002**
(21) Application number: 01204717.1
(22) Date of filing: 11.12.2001
(51) Int. Cl.: E02B 11/02, B62D 63/06, B60P 1/54

(54) **System for placing and removing draining systems**

(30) Priority: 18.12.2000 NL 1016897
(71) Applicant: Klinge, Jan, 7958 RP Koekange (NL)
(72) Inventor: Klinge, Jan, 7958 RP Koekange (NL)

(57) **Abstract**

The invention relates to a system for placing and removing a draining system, comprizing an adapted articulated vehicle for conveying materials and for conveying a small caterpillar tracked vehicle to a site to be drained. The small vehicle is moreover provided with support means (29a,29b,30a,30b) and with tools (17,18,19,20,21,27,28) for carrying out the activities.

## Description

The invention relates to a system for placing and removing a draining system, comprizing a first, wheeled vehicle for bringing and removing the materials necessary for setting up the draining system.

When a draining system is put up in the usual way, one drives a truck, loaded with the necessary material like pipes hoses and filters as close as possible to the site to be drained. Next, the pipes and the filters are carried further to the site. Two types of pipes are still in use, the iron ones which weight about 33 kg and the polyethylene pipes which weight about 18 kg but which tends to bend and bounce. Often, the pipes are much heavier because sand and iron deposit has set to the inside. On the site, the pipes are coupled, after which they are connected to a pump by a hose. Once the pipe is placed, one starts making holes in the ground with the aid of a long hose and a nozzle, in which holes filters are placed. Next, the filters are connected to the pipe with the aid of short hose parts. All this work demands great physical efforts and it must often be performed under difficult circumstances. Indeed, it is an empirical fact that persons doing this type of work will often become prematurely unable to work.

The present invention aims at reducing the amount of physical work to an acceptable level when placing and removing a draining system. It is thereto characterized in that the system comprizes a second, caterpillar driven vehicle, much smaller than the first vehicle, for conveying the materials to the site, on the site and from the site and for performing at least substantially all operations on the site.

A favourable embodiment which provides a possibility for bringing the second vehicle to the site without making additional costs for transportation, is characterized in that the first vehicle has room for placing the second vehicle upon. Preferably, the first vehicle is provided with first hoisting means, suitable for loading and unloading the second vehicle on and of the first vehicle.

A further favourable embodiment with which the supply of water may be realized, substantially without physical efforts, is characterized in that the first vehicle is provided with a water tank and a first reeled-up hose, which hose operationally can be coupled to the second vehicle. In this way, the second vehicle may drag the hose on its way towards the site, with the hose automatically unrolling.

A further favourable embodiment is characterized in that the first vehicle is provided with a water pump, which operationally provides the second vehicle with pressurized water, via the first reeled-up hose. The advantage is that the second vehicle may be constructed lighter.

A further favourable embodiment is characterized in that the second vehicle is provided with a tube-shaped nozzle, mounted onto a second reeled-up hose. With this facility, the spraying of holes can take place substantially automatically, without physical efforts and without the operator who performs the job getting wet or covered in mud. Preferably, the system is provided with a remote control, as such well known to the skilled man, by which the automatic unrolling hose can be controlled, which further reduces the risk of getting wet and dirty.

A further favourable embodiment of the inventive system is characterized in that the second reeled-up hose is self-operating and is mounted, together with the tube-shaped nozzle onto a table which is mounted for rotation in a horizontal plane, in such a manner that work may be performed on both sides of the vehicle, dependent upon the situation.

A favourable embodiment according to another aspect of the invention is characterized in that the rotatable table is provided with a second hoisting device, with the aid of which filters may be pulled out of the ground when the draining system is to be removed. Preferably, also the second hoisting device can be operated by the remote control.

A further favourable embodiment of the invention is characterized in that the second vehicle is provided with at least one pipe support, by which pipes can be conveyed from the first vehicle to the site and vice versa. For lifting the pipes onto and off the pipe support, one may advantageously make use of the second hoisting device.

The invention also relates to a caterpillar driven vehicle, provided with a table mounted for rotation in a horizontal plane, a hoisting device and a tube-shaped nozzle connected to a reeled-up hose placed on the table, where the rotatable table is provided with connecting means for connecting to a water supply and the vehicle is moreover provided with at least one pipe support.

The invention also relates to a rack for transporting pipes, to be used in a system as described above. The inventive rack is characterized in that the rack is provided with a centrally placed lifting lug, that below the lifting lug a recess is made, that on both sides of the lifting lug the same number of pipes can be accommodated and that the rack can be stacked, with and without pipes, in such a manner that a lifting lug fits into the recess of a rack placed above it.

A favourable embodiment of the inventive rack is characterized in that on both sides of the lifting lug three pipes can be accommodated. It is very simple then to transfer three pipes with the aid of the first hoisting device, from the rack, onto the pipe support on one side of the second vehicle.

The invention will now be further explained with the aid of the following figures, in which:
- Fig. 1: represents a possible embodiment of the inventive system;
- Fig. 2: represents a possible embodiment of the second vehicle in side view;
- Fig. 3: represents a possible embodiment of the second vehicle in top view;
- Fig. 4A: represents a rack for transporting pipes in side view;
- Fig. 4B: represents a rack for transporting pipes in top view;
- Fig. 5: represents a possible embodiment of the second vehicle in front view.

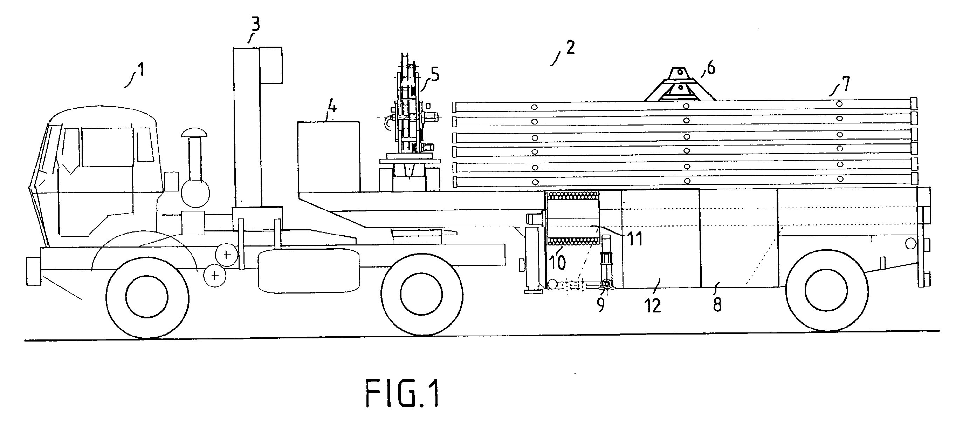

Fig. 1 represents a possible embodiment of the inventive system, consisting of a first vehicle, here in an embodiment as a truck 1 with trailer 2. Truck 1 is built up the classical way, but is provided with a hoisting device 3, such that trailer 2 can be loaded and unloaded without any external help. Trailer 2 has a flat loading floor, onto which a draining pump 4 can be placed and onto which also a second vehicle 5 can be placed and carried off. Moreover, specially developed racks 6 are placed onto the loading floor, on which pipes 7 can be carried off and transferred easily to second vehicle 5. When the site to be drained is reached, at least as close as possible, draining pump 4 and second vehicle 5 are unloaded with the aid of hoisting device 3 and second vehicle 5 is loaded with pipes with the aid of a rack 6, three on one side and three on the other side, conditions permitting. Under the flat loading floor, a water tank 8 is located, from which water can be pumped for spraying the holes in which the filters are to be placed. Under operational conditions, this water is transported to second vehicle 5 with the aid of a pump 9, via a first hose 10, wound on a first hose-reel 11. Moreover, storage space 12 is available situated under the flat loading floor, in which accessories and power cables are stored.

The first vehicle is brought as close as possible to the site to be drained. Next, the second vehicle conveys the pipes to the site and it also pulls hose 10 to the site.

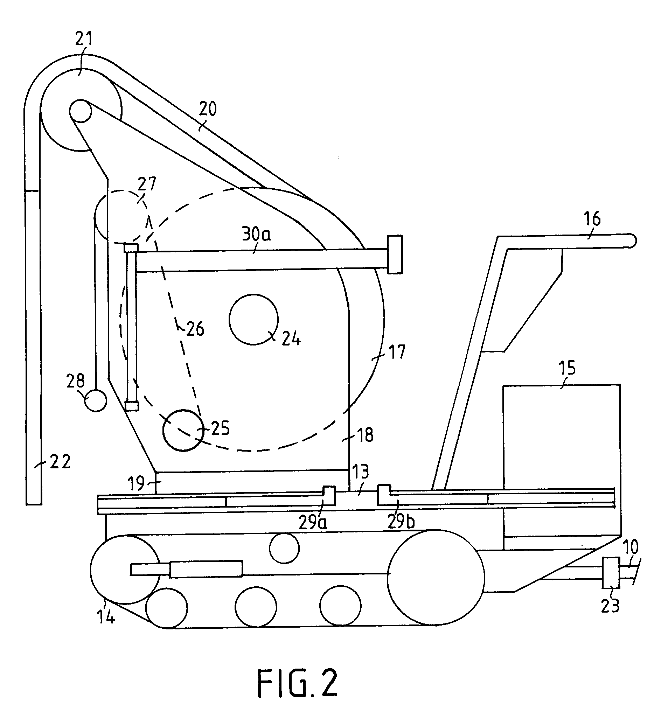

Fig. 2 represents a possible embodiment of the second vehicle 5 in side view, comprizing a frame 13 on caterpillars 14, which is known as such, provided with a motor 15. In the embodiment shown here, an operator may ride along with the second vehicle, in which case he may hold onto a handle 16. The width of second vehicle 5 is about one meter, which enables it to reach virtually any place, while the caterpillars 14 make it possible to work even under difficult conditions of the ground. On frame 13, a second hose-reel 17 is mounted in a U-shaped holder 18, which in turn is mounted for rotation on a mounting plate 19. On second hose-reel 17, a hose 20 is wound which is connected to a nozzle 22 via a hose guide 21. The other end of hose 20 is connected via two rotating joints to a connection point 23, to which hose 10 can be coupled. Operationally, one drops nozzle 22 with the aid of a motor 24 which can rotate hose-reel 17, while via hose 10 water under high pressure is supplied. At the spot where nozzle 22 hits the ground, a hole is made, in which a tubular filter can be placed by hand. In this way, the location to be drained is provided with a number of holes in which filters are placed. These filters are, as usual in the art, connected to pipes 7, which in turn are connected to draining pump 4.

On U-shaped holder 18, a winch 25 is placed, with the aid of which a ring 28 can be hoisted up via a cable 26 and a reel 27. Winch 25 is used when the draining system is to be removed, in which case ring 26 or a belt connected thereto or another accessory is put round a tubular filter, after which the filter can be pulled out of the ground, without using muscular power.

For the transportation of pipes, second vehicle 5 is provided with retractable pipe supports 29a,29b,29c,29d, of which in the figure only pipe supports 29a,29b are visible. With these pipe supports one may, room and conditions of the ground permitting, transport every time up to six pipes, three pipes at each side. Moreover, also U-shaped holder 18 is preferably provided with an additional pipe holder with hinged legs 30a,30b, of which in this figure only leg 30a is visible. If conditions of the ground are difficult, one may transport one pipe, with the legs 30a,30b folded out, which pipe is kept across in front of second vehicle 5. It is also possible to transport one pipe with one of the legs 30a,30b and with winch 25, in which case the pipe is kept alongside second vehicle 5. Of course, winch 25 can also be used for loading and unloading pipes onto and from second vehicle 5.

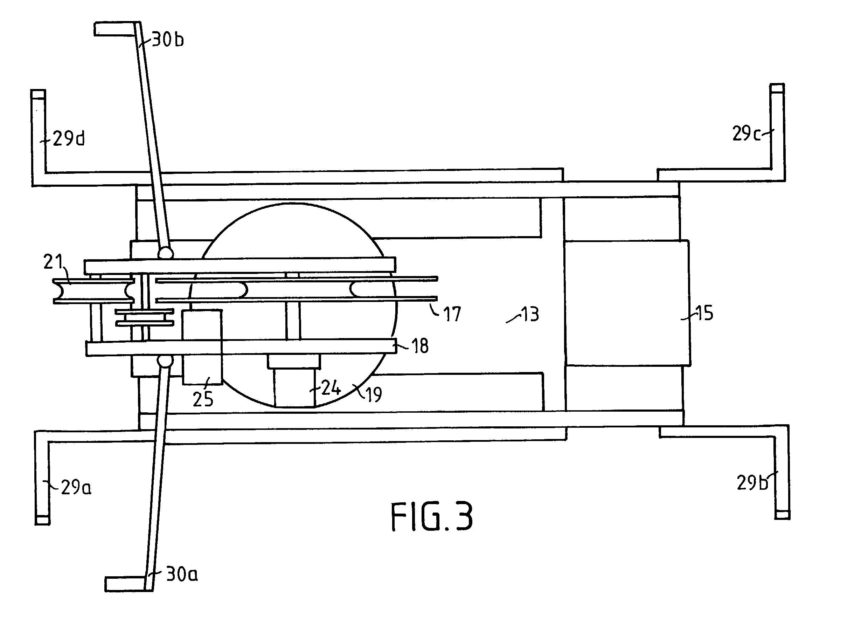

Fig. 3 represents a possible embodiment of the second vehicle in top view, with frame 13, motor 15, mounting plate 19, onto which hose-reel 17, winch 25 and the additional pipe supports 30a,30 are mounted, shown here with the legs folded out, as well as hose guide 21. Also pipe supports 29a,29b,29c,29d are folded out and may each take three pipes.

Fig. 4A represents a rack 6 in side view, which has been especially developed for transporting pipes. Rack 6 consists of a central profile 31a,31b, onto which two profiles 32a,32b are welded which operationally slope up and onto which a lifting lug 33 is welded. Below central profile 31a,31b, two box girders 34a,34b are welded, into which a fork of a forklift can be put. Box girders 34a,34b are connected by two profiles 35a,35b and next to the sloping profiles two stiffening girders 36a,36b are welded, between which a recess is left open into which the sloping profiles of another, lower rack 6 fits when the racks are stacked. Central profile 31a,31b is on both ends provided with a crossbeam, not visible in the figure, which crossbeams are provided with vertically running strips 37a,37b,37c,37d. Rack 6 can accommodate six pipes and is stackable, with and without pipes. When they are loaded onto trailer 2, the racks and the pipes can be fixed in a usual way, for example by lashing gear.

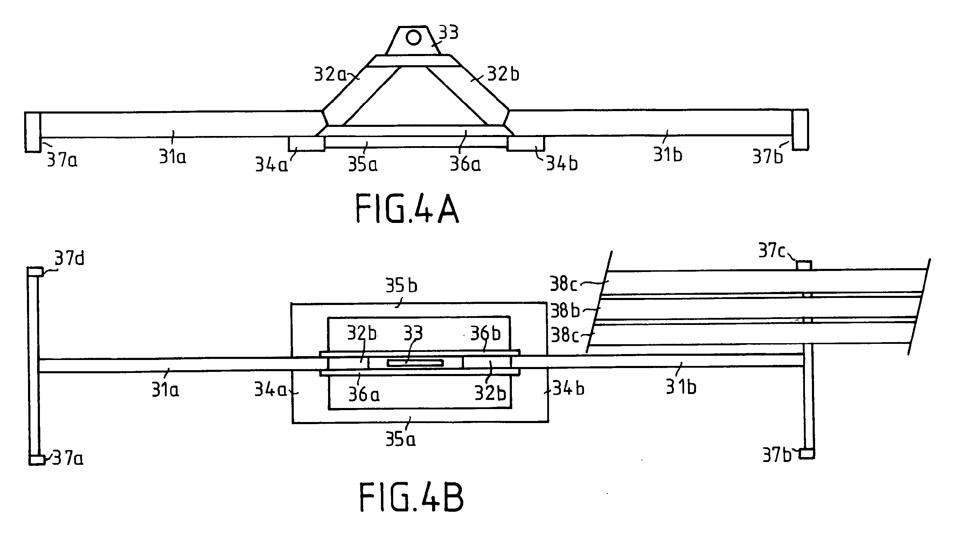

Fig. 4B represents in top view a rack 6, with central profile 31a,31b, sloping-up profiles 32a,32b, lifting lug 33, box girders 34a,34b and profiles 35a,35b. Schematically, parts of three pipes 38a,38b,38c are shown on a side of rack 6.

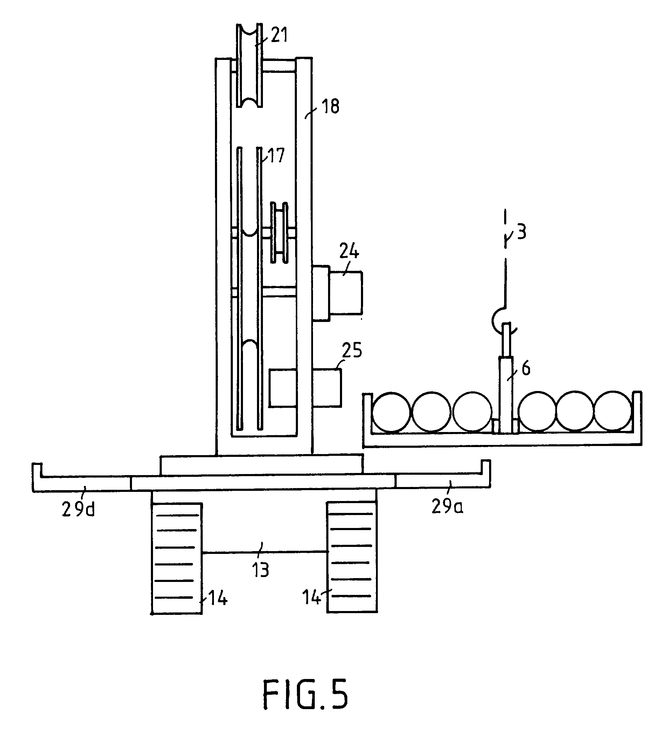

Fig. 5 represents a possible embodiment of the second vehicle in front view, with frame 13, caterpillars 14, second hose-reel 17, hose guide 21, winch 25 and with the pipe supports 29a,29b,29c,29d in an unfolded position. With the aid of first hoisting device 3 one lowers a rack 6, in the process of which three pipes are transferred to pipe supports 29a,29b. In the same way, the other three pipes can be transferred to pipe supports 29c,29d.

## Claims

1. System for placing and removing a draining system, comprizing a first, wheeled vehicle for bringing and removing the materials necessary for setting up the draining system, **characterized in that** the system comprizes a second, caterpillar driven vehicle, much smaller than the first vehicle, for conveying the materials to the site, on the site and from the site and for performing at least substantially all operations on the site.

2. System according to claim 1, **characterized in that** the first vehicle has room for accommodating the second vehicle.

3. System according to claim 2, **characterized in that** the first vehicle is provided with first hoisting means, suitable for loading and unloading the second vehicle on and off the first vehicle.

4. System according to claim 2 of 3, **characterized in that** the first vehicle is provided with a water tank and a first reeled-up hose, which hose is operationally can be coupled to the second vehicle.

5. System according to claim 4, **characterized in that** the first vehicle is provided with a water pump, which operationally provides the second vehicle with pressurized water, via the first reeled-up hose.

6. System according to claim 5, **characterized in that** the second vehicle is provided with tube-shaped nozzle, mounted onto a second reeled-up hose.

7. System according to claim 6, **characterized in that** the second reeled-up hose is self-operating and is mounted, together with the tube-shaped nozzle onto a table which is mounted for rotation in a horizontal plane.

8. System according to claim 7, **characterized in that** the rotatable table is provided with a second hoisting device.

9. System according to claim 6,7 or 8, **characterized in that** the second vehicle is provided with at least one pipe support.

10. Caterpillar driven vehicle, provided with a table mounted for rotation in a horizontal plane, a hoisting device and a tube-shaped nozzle connected to a reeled-up hose placed on the table, where the rotatable table is provided with connecting means for connecting to a water supply and the vehicle is moreover provided with at least one pipe support.

11. Rack for transporting pipes, to be used in a system according to one of the claims 1 t/m 9, **characterized in that** the rack is provided with a centrally placed lifting lug, that below the lifting lug a recess is made, that on both sides of the lifting lug the same number of pipes can be accommodated and that the rack can be stacked, with and without pipes, in such a manner that a lifting lug fits into the recess of a rack placed above it.

12. Rack according to claim 11, **characterized in that** on both sides of the lifting lug three pipes can be accommodated.
